# EUROPEAN PATENT APPLICATION

(11) **EP 1 070 952 A2**
(43) Date of publication of application: **24.01.2001**
(21) Application number: 00306136.3
(22) Date of filing: 19.07.2000
(51) Int. Cl.: G01N 15/02

(54) **Method and means for particle measurement**

(30) Priority: 23.07.1999 GB 9917240
(71) Applicant: Eauxsys (UK) Limited, Camelford, Cornwall PL32 9QZ (GB)
(72) Inventor: Precious, David Martin, Camelford, Cornwall, PL32 9QL (GB)
(74) Representative: Brown, Michael Stanley

(57) **Abstract**

A fluid is caused to flow as a stream along a path between a light source and a light receiver. The light from the source is focused on a thin film within said stream and a scanning technique is applied to record the passage of particles through the thin film.

## Description

### Field of the Invention

This invention relates to a method and means for particle measurement and is particularly concerned with the measurement of small particles in fluid samples. The particles may be inert or of biological or chemical origin.

It is an object of a specific aspect of the present invention to provide an analytical instrument, for use either in the laboratory or as a continuous on-line monitoring device, for measuring particles in water at low concentrations and very small sizes.

A particular application of the present invention is in the analysis of drinking water after filtration to detect conditions consistent with breakthrough of cryptosporidium oocysts. The invention is also applicable to process water particle monitoring and the monitoring of biological fluids and drinks, such as wine and beer, as well as the monitoring of other fluids containing particles.

The invention can also be applied to the measurement of airborne particles, either directly or by bringing them into contact with water in a scrubbing process and then measuring the particles contained in the water.

The measurement apparatus currently used for the above purpose is such that a stream of sample water is passed through a very small flow cell, typically with a cross-section of a few hundred microns. A very thin beam of light is passed through the flow cell in a direction at right angles to the direction of flow of the sample water such that any particles on which the light beam impinges will reduce the level of light received on the opposite side of the flow cell.

The very small flow cell tends to become blocked fairly regularly if there are significant numbers of particles in the sample water and, if there are high numbers of particles, it is necessary to apply statistical techniques to separate the particle characteristics.

It is accordingly a further object of the present invention to provide a method and means for measuring particles in fluids which offer improvements over the known technique described above.

### Summary of the Invention

According to a first aspect of the present invention there is provided a method of measuring particles in a fluid, the method comprising providing a light source and a light receiver, causing the fluid to flow as a stream along a path between the light source and the light receiver, focusing the light from the source on a thin film within said stream and applying a scanning technique to record the passage of particles through the thin film.

According to a second aspect of the present invention there is provided means for measuring particles in a fluid, the measuring means comprising a light source and a light receiver, means whereby the fluid can be caused to flow as a stream along a path between the light source and the light receiver, means for focusing the light from the source on a thin film within said stream and scanning means for recording the passage of particles through the thin film.

Other preferred features of the invention are incorporated in the specific embodiments described below.

### Brief Description of the Drawings

Figure 1 is a sectional view of a particle scanner,
Figure 2 is a block diagram of the particle scanner, and
Figure 3 is a block diagram showing the electronic signal conditioning system of the particle scanner.

### Description of the Preferred Embodiments

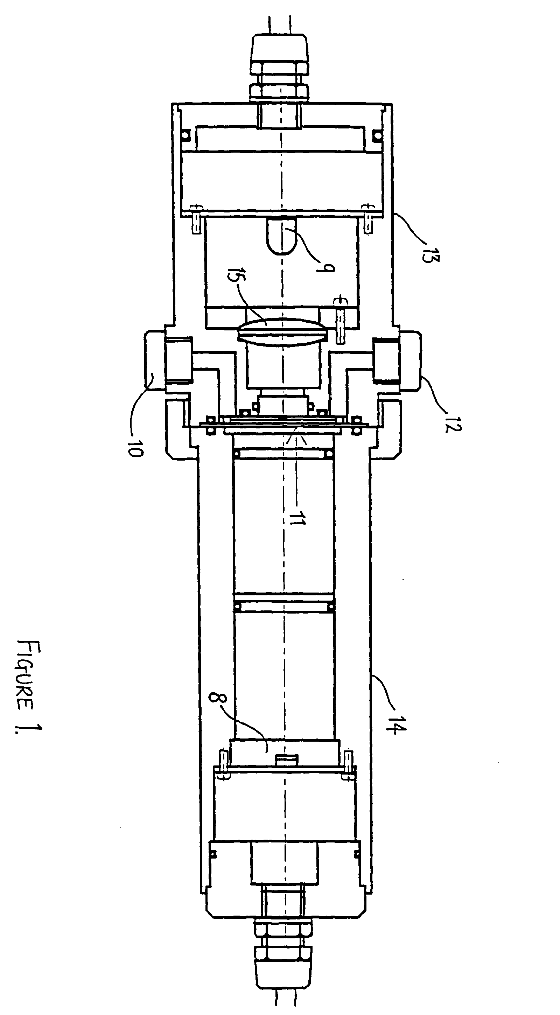

As shown in Figure 1, the apparatus has an inlet 10 through which the liquid sample is introduced. The liquid sample passes from the inlet 10 through a flow guide/aperture plate 11 to an outlet 12. The flow guide/aperture plate 11 is located between two housing structures, namely an emitter housing 13 and a receive housing 14. The emitter housing 13 contains an axially located light source 9, a high magnification lens system 15 and a printed circuit board on which the appropriate circuit elements are mounted, while the receive housing 14 contains an optical system 8 and a further printed circuit board on which appropriate circuit elements are mounted.

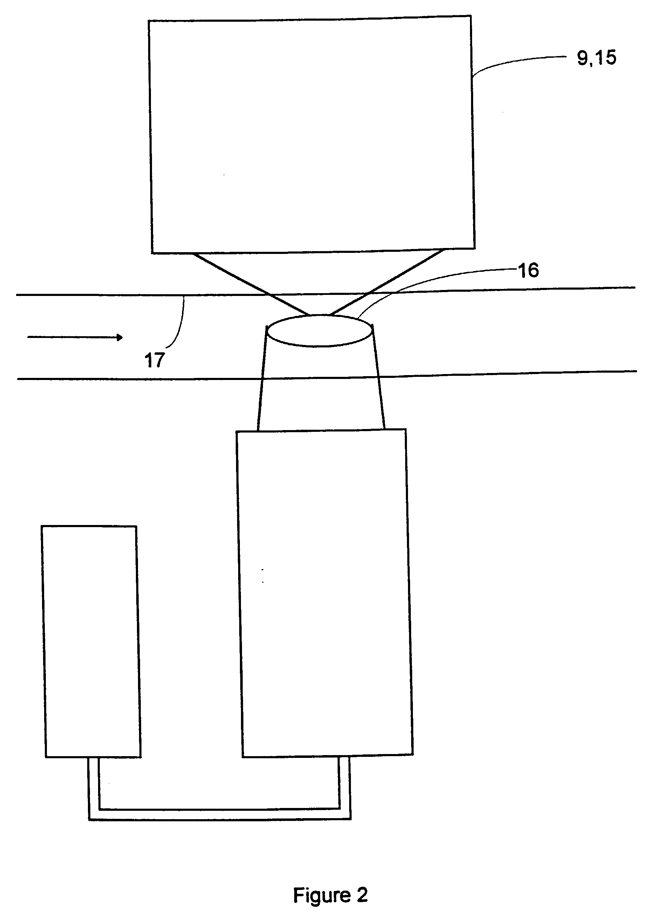

A thin viewing region is defined optically, as illustrated in Figure 2, using a technique similar to that of a microscope. The effect of using a high magnification lens system 15 is to allow only a very thin film or layer of sample water to be in focus, effectively creating a flow cell which is only a few microns thick. The number of particles entering the focused field of view is very small compared to the total number of particles in the sample stream and it is thus possible, using the scanning technique described below, to measure and count each individual particle in that part of the sample currently focused by the optical system.

The thin film which is in focus has characteristics representative of those of the total sample and the source of light is focused exactly at the spot where the thin film flow cell is located. This means that only the critical measurement area is illuminated during measurement. With the exception of the use of ultra violet light described below, the type and wavelength of light can be selected to optimise the type and shape of particle to be detected. Typically, light having a wavelength of the order of 660 nM can be used.

Figure 2 is a block diagram of the particle scanning system. The light source 8 and the high magnification lens system 15 concentrate the illumination onto a very small area of the virtual flow cell 16 created by the optical system. The light source 9 is actively stabilised by feeding back information concerning the light intensity to a controlling servo circuit (not shown).

The virtual flow cell 16 is contained within a macro sized flow cell 17 designed to give laminar flow and to resist blocking by particles of the size range normally encountered in the sample flow. The micro sized optical or flow cell 16 is created by the combination of lenses and focused light source. The apparent size of the cell is only a few microns thick making it very selective in respect of particles in size ranges above 0.5 microns.

The receive housing 14 contains a very high gain optical system 8 combined with high gain photo detector electronics. It creates a very thin depth of field, only a few microns thick and a small radius of only about 50 microns.

In order to record the passage of the particles through the thin film optical flow cell, the received light is stored using a digital scanning technique. A large number of measurements are made in a short time-scale, and these measurements are stored in a memory chip. The technique may be likened to line scanning and the input signals are recorded and appear as clearly discernible shapes which can be related to the type and source of the particles. The speed and number of measurements during scanning affect the resolution and time base of the system. The speed can be varied via a microprocessor or other electronic hardware. Multiple scans may be made in order to increase the amount of data taken from the system. The stored values are analysed by a microprocessor and the size, aspect ratio and area of the particles are defined. This data is used to count the particles.

The microprocessor is programmed so as to allow the user to select the size range of particles in which he is interested. This means that any unwanted information is rejected, allowing the system output to be simplified to a single value, being the count for the required size range. This can be presented in a number of ways, for example, as an analogue output or as a serial data string. The ability to resolve the data into a simple usable output is also important.

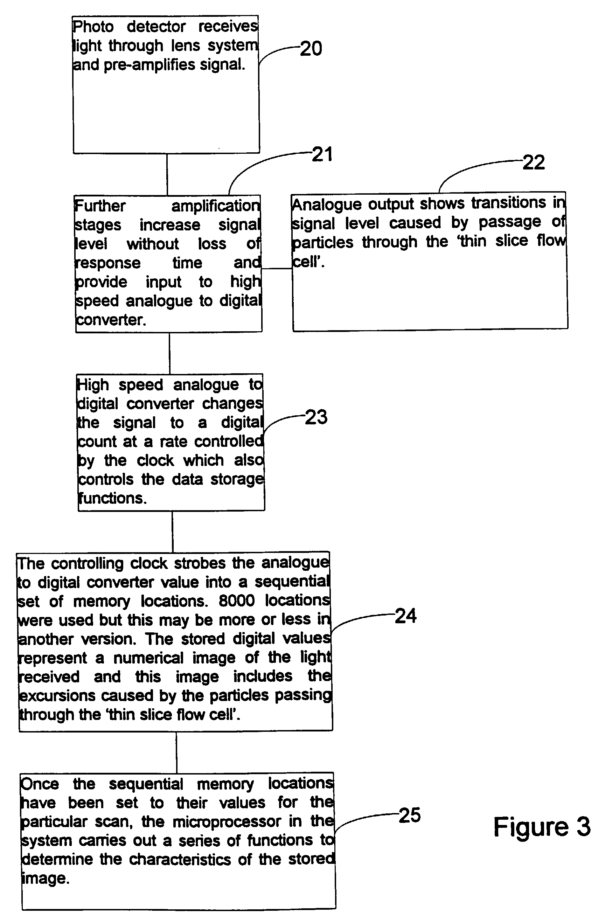

Turning next to Figure 3, this is a block diagram showing the electronic signal conditioning. At step 20, the photo detector receives the light through the lens system 8 and pre-amplifies a signal. At step 21, further amplification stages increase the signal level without loss of response time and provide an input to a high speed analogue to digital converter. As indicated at 22, the analogue output shows transitions in signal level caused by passage of particles through the flow cell 16. This analogue signal could be used for a simple version of the analyser requiring no digital processing.

As indicated at 23, the high speed analogue to digital converter changes the signal to a digital count at a rate controlled by a clock, which also controls the data storage functions. As shown at 24, the controlling clock strobes the analogue to digital converter value into a sequenced set of memory locations. Eight thousand locations can be used, but the number of locations may be increased or decreased, as required. The stored digital values represent a numerical image of the light received and this image includes the incursions caused by the particles passing through the flow cell 16.

As indicated at 25, once the sequential memory values have been set to their values for the particular system, the microprocessor carries out a series of functions to determine the characteristics of the stored image.

### Typical Number Sequences

a) All zeroes, i.e. 000000000000000000 onwards.
   This represents either no flow through the system - this is checked automatically using a flow verification cell - or no particles present, which is typical of analar water or good tap water.
b) Numerical groups, e.g. 0000000000010000000100000121, etc.
   The number groups represent the scanned response to a particle as it passes through the flow cell 16. Typically, individual particles are identified. In some cases, however, a double peak is observed, indicated the presence of two particles travelling together or an oddly shaped particle, for example, 000000000001232321000000,

Using the microprocessor, the zero base line is first eliminated. The resulting particle count in the scan is then available. The system logic identifies the beginning and end of the number group, identifies and stores the peak value, measures the width as a count and works out the area by adding up the numbers. Additional information is gained from the ratio of base to height.

The particle scans are then sorted according to one of their characteristics into "buckets" which identify a size range. The size ranges may be from 0.5 microns to 25 microns. Alternative size ranges may be identified by altering the scanning rate and optical gain of the system.

In order to compile a meaningful count, the software in the system allows the particle count in each "bucket" to be averaged, totalised or both. The number of selection "buckets" to be used in this analysis is variable from 1 to 10, but this number may be increased if required.

As a further refinement, the microprocessor can initiate a sampling process to catch samples of water that have been identified as having particles in the size range of interest. This can help to target further laboratory testing processes.

The principles described above can be applied with ultra violet light in order to encourage fluorescence of any biological species that may be present. This is of use for further specifying the type of particle present. Ultra violet light impinges on a particle causing fluorescence and an increase in light level at a specific wavelength. This increase in light level can be used to separate inert particles from biological particles. The electronic scanning process is also used for this version. In a further version, both ultra violet light and other wavelengths can be used together to further increase the ability to identify different particle lengths.

An additional scanned measurement channel may be provided, which includes a suitable flow measuring device, and this will be arranged to provide a reading of the sample flow rate, which can then be included in the particle counting algorithm.

## Claims

1. A method of measuring particles in a fluid, the method comprising providing a light source and a light receiver, causing the fluid to flow as a stream along a path between the light source and the light receiver, focusing the light from the source on a thin film within said stream and applying a scanning technique to record the passage of particles through the thin film.

2. A method as claimed in Claim 1, which includes the use of a photo detector which provides an input signal to an analogue to digital converter.

3. A method as claimed in Claim 2, in which the analogue output shows transitions in signal level caused by passage of particles through the flow cell.

4. A method as claimed in Claim 2, in which the analogue to digital converter changes the signal to a digital count at a rate controlled by a clock.

5. A method as claimed in Claim 1, which includes the use of ultra violet light which causes fluorescence of biological particles.

6. A method as claimed in Claim 1, which includes the use of a flow measuring device to measure the rate of flow of the fluid.

7. Means for measuring particles in a fluid, the measuring means comprising a light source and a light receiver, means whereby the fluid can be caused to flow along a path between the light source and the light receiver, means for focusing the light from the source on a thin film within said stream and scanning means for recording the passage of particles through the thin film.

8. Measuring means as claimed in Claim 7, which includes an emitter housing containing the light source and a lens system, a receive source containing the light receiver, a flow guide/aperture plate located between the emitter housing and the receive housing, an inlet for the supply of the fluid to the flow guide/aperture plate and an outlet for the discharge of the fluid from the flow guide/aperture plate.

9. Measuring means as claimed in Claim 8, in which the receive housing contains a photo detector which provides an input signal to an analogue to digital converter.

10. Measuring means as claimed in Claim 9, which includes a clock for controlling the rate at which the analogue to digital converter changes the input signal to a digital count.
